# EUROPEAN PATENT APPLICATION

(11) **EP 2 293 424 A2**
(43) Date of publication of application: **09.03.2011**
(21) Application number: 10173205.5
(22) Date of filing: 18.08.2010
(51) Int. Cl.: H02M 5/00

(54) **AC power switching module**

(30) Priority: 01.09.2009 GB 0915108
(71) Applicant: Vetco Gray Controls Limited, Bristol BS48 1BS (GB)
(72) Inventor: Bartelous, Peter M. C., Beaminster, Dorset DT8 3LD (GB)
(74) Representative: Emerson, Peter James

(57) **Abstract**

An AC power switching module comprising: AC current input and output means; switching means located between said input and output means for selectively blocking or passing said AC current; a switch controller arranged to provide an output signal to the switching means to control the state of the switching means; a primary control for setting the output of the switch controller; and a secondary control for setting the output of the switch controller, wherein said secondary control comprises a current-dependent circuit dependent on the AC current.

## Description

This invention relates to an AC power switching module or solid state AC relay. In particular, but the invention is not limited thereto, such a module may be employed beneficially within an underwater facility such as a subsea hydrocarbon facility, where maintenance is costly and difficult.

At present, subsea wells are typically supplied with electric power via an umbilical cable connected between a control platform located at the surface (or "topside"), for example onshore, a platform or a vessel, and the subsea well facility, where it terminates in an umbilical termination assembly (UTA). Power is then fed from the UTA to a subsea control module (SCM) mounted on the well tree. The UTA may feed a number of wells within a well complex. In addition, SCMs are also sometimes required to supply electric power to subsea devices external to the tree. In all such cases it is prudent to protect the multiplicity of parallel power feeds from a short circuit fault in one of them, as such a fault may cause disabling of power to the others. Currently, such protection is achieved by the use of positive temperature coefficient thermal resistive devices, commonly known as PTCs. If a short circuit occurs, the resultant substantial increase in current causes heat generation in the device due to its resistance. The temperature of the device is therefore raised, thereby increasing the resistance of the device. This in turn limits the short circuit current flow to a level that the power source can maintain, whilst also continuing to deliver power to the rest of the system.

However, the use of such PTC devices produces associated problems. For example, in the event of a short circuit fault, PTCs are wasteful of power. In addition, they have a limited number of operations and so careful design of their installation is essential to enable dissipation of the heat produced in order to achieve an acceptable reliability. Other methods rely on using an external fuse or circuit breaker for example.

It is important that because the equipment may be located subsea and is therefore relatively inaccessible, any protection circuitry must be self re-setting.

It is an aim of the present invention to solve the above problems. This aim is achieved by providing a solid state relay with integral electronic current protection, thus eliminating the need for PTCs, external fuses or circuit breakers, while maintaining short circuit fault protection.

In this way, the invention provides current overload protection capabilities to AC power relays, such as those used to switch power in subsea well systems.

In accordance with the present invention, there is provided an AC power switching module comprising:
AC current input and output means;
switching means located between said input and output means for selectively blocking or passing said AC current;
a switch controller arranged to provide an output signal to the switching means to control the state of the switching means;
a primary control for setting the output of the switch controller; and
a secondary control for setting the output of the switch controller,
wherein said secondary control comprises a current-dependent circuit dependent on the AC current.

The invention provides several advantages over the prior art, such as:
i) High speed current protection for AC power lines.
ii) The power folds back to near zero on overload.
iii) The system automatically resets and full power is resumed when the overload is removed.

The invention will now be described with reference to the accompanying drawing, in which:
Fig. 1 schematically shows an AC relay power switching module in accordance with a first embodiment of the present invention; and
Fig. 2 schematically shows an AC relay power switching module in accordance with a second embodiment of the present invention.

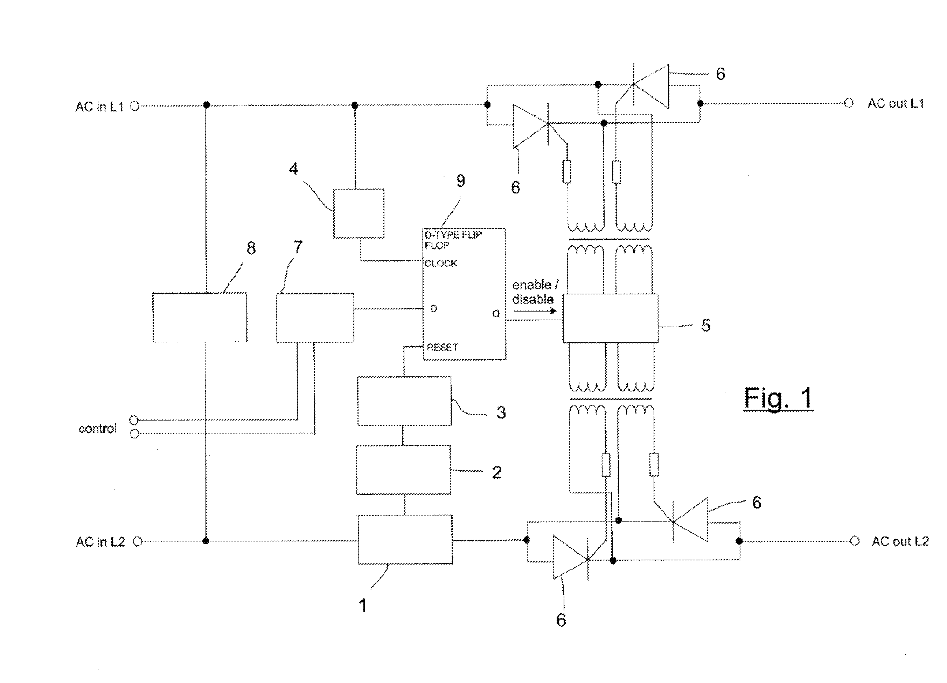

Fig. 1 is a schematic diagram of an AC relay power switching module according to a first embodiment of the invention. Such a power switching module acts to switch on and off AC power under the primary control of an optically isolated control line. In accordance with the present invention, the module features on-board current sensing such that if the load on the AC output of the module exceeds a set current limit, the AC power to the output is turned off within one mains cycle.

The module comprises a printed circuit board with switching means comprising four thyristor / semiconductor (also known as silicon) controlled rectifier (SCR) power switching elements 6. The thyristors 6 are paired so that two thyristors are provided on AC line L1 between the AC input and output, and two thyristors are provided on AC line L2 between the input and output, each pair being biased in opposite directions. As is well-known, these elements act to pass current in one direction only, and then only if a pulsed signal is received at their gate input - otherwise the current is blocked in both directions. In this case, the switching means also comprises a pulse generator 5 to produce the pulsed signal output. As described in more detail below, operation of thyristors 6 is controlled by either enabling or disabling the pulse generator 5. To effect this, either an "enable" or a "disable" signal is sent to the pulse generator 5 by a switch controller, here comprising a control logic component 9 with three control inputs from, respectively, a hi-lo crossing detector (also known as an AC zero voltage crossing detector) 4, opto-isolator 7 and a current-dependent circuit, described in more detail below. Control logic component 9 contains a D-type flip flop, so that the enable and disable output signal states are stable. As a safety feature, the normal function of the control logic 9 is to disable the pulse generator 5.

The control logic component 9 receives a primary control input from an opto-isolator 7 and a secondary control input from an AC current-dependent circuit comprising a "current monitoring" resistance 1, comparator 2 and monostable 3, as will be described in detail below. The electronics of the power switching module are powered by a low voltage power supply unit 8.

The resistance 1 is monitored by pulsing it with power approximately every second for no more than one mains cycle until the overload is removed after which continuous and full power is restored.

The crossing detector 4 acts to synchronise the SCR 6 switch on with zero AC voltage. This is to minimise current spikes and distortion, thus providing low noise, low electromagnetic compatibility (EMC) switching.

The current limiting circuit operates in detail as follows:
In normal, fault-free operation, if an "enable" primary control signal input is received by control logic component 9 from opto-isolator 7, the pulse generator 5 is sent an "enable" signal from control logic component 9, causing the pulse generator 5 to generate pulses and thus switch on thyristors 6. The function of this continuous pulse train is to ensure reliable switching of the SCRs 6 should the current waveform lag behind the voltage waveform due to inductive loading.

Resistance 1 generates a voltage across the inputs to voltage comparator 2 in dependence on the AC output loading level. The AC current may in effect be monitored by measuring the voltage drop across the resistance 1. When the AC line current, and hence the voltage to the comparator 2, exceeds a predetermined reference threshold value, the output of the voltage comparator 2 changes. This triggers monostable 3, which resets the control logic component 9. This in turn causes control logic component 9 to produce a "disable" output to the pulse generator 5, which removes the pulsed gate output drive to thyristors 6. As a result, the thyristors 6 switch off and AC power is turned off within 1 mains cycle. The monostable 3 is set to revert to its stable state after approximately one second thus holding off the power for this period, after which the control logic component 9 is caused to send an "enable" signal to the pulse generator 5 to restore the pulsed gate drive to the thyristors 6. If the overload remains, the current-dependent circuit will immediately disable the drive once again. As mentioned above, the normal function of the control logic 9 is to disable the pulse generator 5. The D-type flip flop of the control logic 9 is clocked when an "enable" primary control input from opto-isolator 7 is received and the AC voltage has fallen to zero, as determined by crossing detector 4. This produces an "enable" input to the pulse generator 5 until disabled by a current overload or by the primary control input. Reliable triggering of the thyristors 6 is thus provided, irrespective of the phase relationship between the AC line current and voltage, which may vary with inductive or capacitive loads.

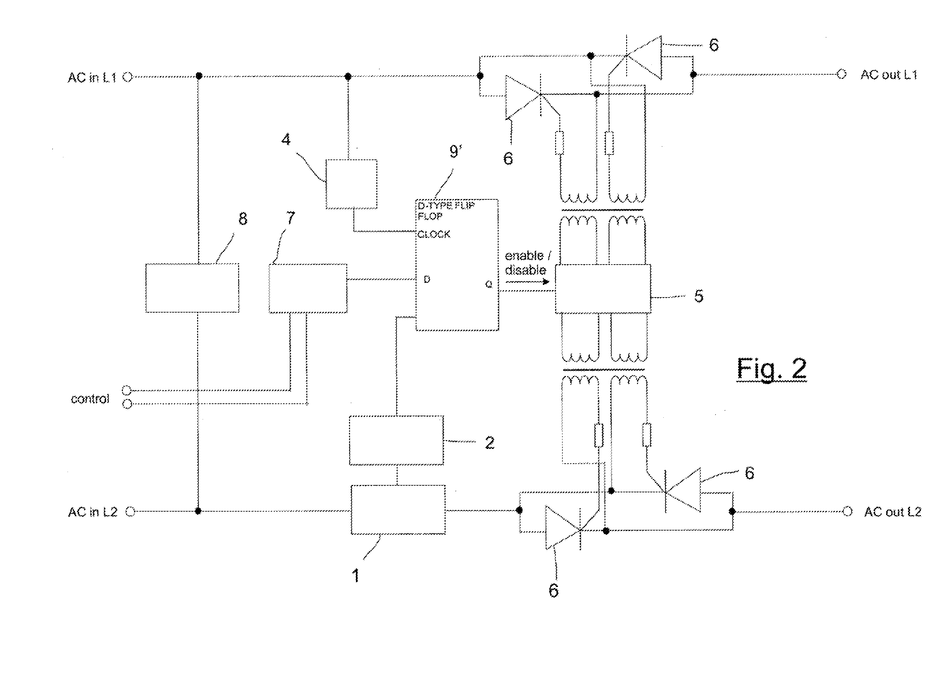

Fig. 2 schematically shows a second embodiment of the present invention. This embodiment has many similarities with the first embodiment described above, and like components retain the same labelling as in Fig. 1. With this configuration however, the control logic of component 9' is slightly changed, so that there is no requirement for a monostable. In this embodiment, the power switching module is arranged to trip off permanently upon an overload.

In the event of a current overload, comparator 2 sends a disabling signal directly to control logic component 9'. This in turn causes a "disable" signal to be sent to the pulse generator 5. The control logic component 9' can only be reset by turning the primary control signal via opto-isolator 7 off then on again, thus resetting the trip.

The above-described embodiments are exemplary only, and various alternatives within the scope of the claims will be apparent to those skilled in the art.

## Claims

1. An AC power switching module comprising:
AC current input and output means;
switching means located between said input and output means for selectively blocking or passing said AC current;
a switch controller arranged to provide an output signal to the switching means to control the state of the switching means;
a primary control for setting the output of the switch controller; and
a secondary control for setting the output of the switch controller,
wherein said secondary control comprises a current-dependent circuit dependent on the AC current.

2. A module according to claim 1, wherein the switching means comprises a thyristor.

3. A module according to claim 2, wherein the thyristor comprises a semiconductor controlled rectifier.

4. A module according to either of claims 2 and 3, wherein the switching means further comprises a pulse generator connected to the gate of the thyristor, for outputting a pulsed output to the thyristor when caused to do so by the switch controller, the pulsed output enabling the thyristor to pass the AC current therethrough.

5. A module according to any preceding claim, wherein the secondary control is operable to cause the switch controller to send an output signal to the switching means to cause the switching means to block the AC current therethrough.

6. A module according to any preceding claim, wherein the current-dependent circuit comprises a comparator to cause the switch controller to produce a "disable" output signal, turning the switching means off, when the AC current exceeds a predetermined threshold value.

7. A module according to claim 6, wherein the comparator is connected to the AC current via a resistance.

8. A module according to any preceding claim, wherein the current-dependent circuit comprises a monostable for connection to the switching means, such that a change in state of the monostable causes the switching means to change its output signal.

9. A module according to any of claims 1 to 7, wherein the switch controller is caused to operate such that when it has been caused to produce an output signal which turns the switching means off, the switch controller will remain in this state until instructed to do so by the primary control.

10. A module according to any preceding claim, wherein the primary control comprises an opto-isolator.

11. A module according to any preceding claim, wherein the switch controller comprises a control logic component.

12. A module according to claim 11, wherein the control logic component comprises a flip flop.

13. A module according to either of claims 11 and 12, wherein the control logic component is set by default to produce an output signal to cause the switching means to block AC current.

14. A module according to any of claims 11 to 13, wherein the output of the crossing detector is dependent upon the AC voltage.

15. A module according to claim 14, wherein the control logic component is be clocked when both of the conditions are met:
i) the AC voltage is zero; and
ii) an enabling control is received by the control logic component from the primary control.

16. A module according to any preceding claim, wherein the switch controller comprises a hi-lo crossing detector.

17. A subsea control module comprising a module according to any preceding claim.

18. An umbilical termination assembly comprising a module according to any of claims 1 to 16.

19. A subsea well facility comprising a module according to any of claims 1 to 16.
